(19) **Europäisches Patentamt**

**European Patent Office**

**Office européen des brevets**

(11) **EP 4 749 773 A1**

(12) **EUROPEAN PATENT APPLICATION**

(43) Date of publication:
27.05.2026 Bulletin 2026/22

(21) Application number: 25212341.9

(22) Date of filing: **30.10.2025**

(51) International Patent Classification (IPC):
*H01M 12/06* (2006.01)

(52) Cooperative Patent Classification (CPC):
H01M 12/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.11.2024 US 202463715244 P**

(71) Applicant: **E-Zinc Inc.
Mississauga, ON L5T 2A4 (CA)**

(72) Inventor: **TONER, Liam Andrew
TORONTO, M6G 2P2 (CA)**

(74) Representative: **ZBM Patents - Zea, Barlocci &
Markvardsen
Rambla de Catalunya, 123
08008 Barcelona (ES)**

(54) **METHOD AND SYSTEM FOR CONTROLLING WATER BALANCE IN METAL-AIR ELECTROCHEMICAL CELLS**

(57) A method of controlling water balance in a metal-air electrochemical cell during operation of the electrochemical cell involves controlling a ratio of partial pressure of water vapor in an inlet supply of air to equilibrium water vapor pressure of an electrolyte of the metal-air electrochemical cell. Controlling the ratio is done by controlling one or both of the partial pressure of water vapor in the inlet supply of air and the equilibrium water vapor pressure of the electrolyte. The method can be performed by a system having a programmable controller programmed to perform the method and configured to receive signals from sensors and control the relative humidity and temperature control devices based on the signals received from the sensors.

EP 4 749 773 A1

**Description**

Cross-reference to Related Applications

This application claims the benefit of USSN 63/715,244 filed November 1, 2024, the entire contents of which is herein incorporated by reference.

Field

This application relates to electrochemical cells, in particular to metal-air electrochemical cells, and systems and methods for controlling water balance therein.

Background

In a metal-air electrochemical cell (e.g., a zinc-air cell), air flowing through the cell can either cause water to be stripped from or added to an electrolyte in the cell. This is especially true for open and semi-open metal-air electrochemical cells. If the cell electrolyte gains or loses excessive amounts of water over time, the electrolyte concentration will drift from optimal operating conditions causing performance degradation. If the cell loses excessive water over time, the electrolyte level may drop low enough to expose parts of the electrodes. If parts of the electrodes are not submerged in electrolyte, ions cannot transfer between them so the sections of the electrode that are not submerged in electrolyte cannot participate in the chemical reactions necessary for cell operation. If the cell gains excessive water over time, the volume of the electrolyte may increase beyond the capacity of the cell tank causing flooding and electrolyte leaks. It is therefore desirable to maintain proper water balance in the electrolyte throughout operation of the cell.

There is a need for efficient systems and methods for controlling water balance in metal-air electrochemical cells, especially zinc-air cells.

Summary

A method of controlling water balance in a metal-air electrochemical cell during operation of the electrochemical cell comprises: controlling a ratio of partial pressure of water vapor in an inlet supply of air to equilibrium water vapor pressure of an electrolyte of the metal-air electrochemical cell, wherein controlling the ratio is done by controlling one or both of the partial pressure of water vapor in the inlet supply of air and the equilibrium water vapor pressure of the electrolyte.

A system for controlling water balance in a metal-air electrochemical cell during operation of the electrochemical cell comprises: an air supply; a metal-air electrochemical cell pneumatically connected to the air supply to receive inlet air from the air supply; a humidity sensor configured to determine the relative humidity of the inlet air; a first temperature sensor configured to determine the temperature of the inlet air; a humidity control device and a temperature control device between the air supply and the metal-air electrochemical cell for controlling relative humidity and temperature of the inlet air; a second temperature sensor configured to determine the temperature of an electrolyte in the electrochemical cell; and, a programmable controller programmed to perform the method and configured to receive signals from the sensors and control the humidity and temperature control devices based on the signals received from the sensors.

For metal-air electrochemical cells, the correct vapor pressure balance between the electrolyte and inlet supply of air is necessary to ensure that the bulk electrolyte does not gain or lose too much water over time. The partial pressure of water vapor in air depends on both temperature and relative humidity, therefore relying solely on relative humidity determination and control of the inlet supply of air is inadequate. Additionally, relying only the determination of the relative humidity in the air space next to the electrolyte is inadequate.

The equilibrium vapor pressure (also called saturation vapor pressure, or simply vapor pressure) of the electrolyte describes the propensity of the electrolyte to evaporate water, and it varies with both temperature and the concentration of electrolyte (both of which may change throughout a cell charge and discharge cycle). Higher electrolyte equilibrium vapor pressure yields greater evaporation, lower yields less evaporation. It has now been found that if the partial pressure of water vapor of the inlet air supplied to the electrochemical cell is equal to the equilibrium vapor pressure of the electrolyte, water balance is achieved.

To maintain proper balance of water in the electrolyte of the electrochemical cell, the water vapor pressure of the inlet supply of air (i.e., the partial pressure of water vapor in the inlet supply of air) as a function of temperature and relative humidity must be controlled. To determine how to control the water vapor pressure of the inlet supply of air, the water vapor pressure of the inlet supply of air is compared to the equilibrium water vapor pressure of the electrolyte. The equilibrium water vapor pressure of the electrolyte is determined from the temperature and concentration of the electrolyte. If the amount of water in the electrolyte is to be maintained at a current level, the water vapor pressure of the inlet supply of air is controlled to be the same as the equilibrium water vapor pressure of the electrolyte. If the amount of water in the electrolyte is too low, the water vapor pressure of the inlet supply of air is controlled to be higher than the equilibrium water vapor pressure so that water is added from the inlet supply of air into the electrolyte. If the amount of water in the electrolyte is too high, the water vapor pressure of the inlet supply of air is controlled to be lower than the equilibrium water vapor pressure so that water is removed from the electrolyte into the air to be exhausted out of the cell. Thus, long-term cell water loss and gain is combatted by determining the equilibrium water vapor pressure of the cell electrolyte, and then determining the relative humidity and temperature setpoints to which the inlet supply of air should be conditioned based on the electrolyte vapor pressure in order to properly control the water vapor pressure of the inlet supply of air to properly control water loss and gain in the cell.

In some embodiments, the method employs mass flow rate of the inlet air, electrolyte temperature, and the electrolyte concentration to determine the desired water vapor pressure of the inlet air, which then leads to determining the temperature and relative humidity setpoints for the inlet air. In some embodiments, a state of charge of the electrochemical cell is used to estimate electrolyte concentration. The state of charge is used to determine the concentration of the electrolyte, which is combined with electrolyte temperature to calculate the saturation vapor pressure of the electrolyte. Thus, in some embodiments, water balance in a metal-air electrochemical cell is controlled by adjusting a mass flow rate of water vapor in an inlet air stream based on the state of charge of the cell (as proxy for concentration of electrolyte) and the electrolyte temperature according to an experimentally derived or theoretical approximation of a calibration curve between the mass flow rate of the water vapor in the inlet air stream and the rate of water addition/loss to/from the cell.

In some embodiments, a target cell water balance is identified; a target water vapor pressure difference between the water vapor pressure in the inlet supply of air and the equilibrium water vapor pressure of the electrolyte, which would result in achieving the target cell water balance, is determined empirically from a time series dataset correlating the vapor pressure difference to the cell water balance; and, temperature and relative humidity of the inlet supply of air are adjusted based on temperature and relative humidity setpoints determined from the target water vapor pressure difference. In some embodiments, the time series dataset correlating the vapor pressure difference to the cell water balance is obtained from a continuous calibration curve using data from a plurality of tests. In some embodiments, the time series dataset correlating the vapor pressure difference to the cell water balance is obtained from a series of discrete points of the vapor pressure difference vs. the cell water balance recorded in a lookup table and interpolated to find the cell water balance given the vapor pressure difference or vice-versa.

The method may be embodied in a system comprising a programmable air system controller programmed to automatically adjust water balance in the electrochemical cell based on the method. The temperature and relative humidity of the inlet supply of air, along with the temperature and concentration of the electrolyte are used to determine the ratio of the partial pressure of water vapor in the inlet supply of air to the equilibrium water vapor pressure of the electrolyte to inform the air system controller to change inlet air vapor pressure (via temperature and/or relative humidity control) to ensure excess water is not being removed or added to the bulk electrolyte of the metal-air electrochemical cell over time. In the present technology, the vapor pressure balance between the electrolyte and the inlet supply of air is the property of interest.

The air system comprises various physical components including a programmable controller in which the method is programmed as an algorithm. Other physical components of the system include, for example, at least one humidity control device, at least one temperature control device and at least one flow rate device (e.g., a variable speed air pump), which can be used to control the humidity, temperature and mass flow rate of the inlet supply of air. In addition, the system may comprise various sensors, for example, at least one humidity sensor configured to determine the relative humidity of air, at least one air temperature sensor and at least one pressure sensor. The programmable controller is configured to receive signals from the at least one sensor and is configured to control at least one humidity control device, the at least one temperature control device and the at least one flow rate device in accordance with the programmed method based on the signals received from the at least one sensor. At a high level, the algorithm controls the system to control the flow of water into/out of the inlet supply of air being supplied to one or more electrochemical cells based on a desired water balance outcome (i.e., net water gain, net water loss, or net water balance).

In some embodiments, the system comprises a water recycling subsystem that replenishes water in the electrolyte when the electrolyte level in the electrochemical cell is below an acceptable electrolyte level. In some embodiments, the water recycling subsystem comprises a liquid level sensor that senses the electrolyte level. In some embodiments, the water recycling subsystem comprises a water reservoir and a pump to pump water from the reservoir into the electrolyte in the cell. In some embodiments, the water recycling subsystem comprises a water reservoir and a valve, the valve operable to open and close to allow water from the reservoir to replenish the electrolyte when the electrolyte level in the electrochemical cell is below the acceptable electrolyte level. In some embodiments, the programmable controller receives signals from the liquid level sensor and controls the pump or the valve to replenish water in the electrolyte.

The method and system of controlling water balance can be applied to an electrochemical system having one or a plurality of cells. For a plurality of cells, if it is not feasible to measure electrolyte temperature and concentration on every cell, an estimated average across all cells can be used instead. In the absence of sensors on every cell, thermal modelling and state of charge algorithms can be used to estimate electrolyte temperature and concentration, respectively. All cells may not be perfectly balanced this way, but on average the desired water balance outcome (gain/loss/balance) can be achieved.

A metal-air electrochemical cell comprises a metal-containing material that acts as an anode and oxygen-containing material that acts as a cathode. In some embodiments, the oxygen-containing material is provided as a gas, for example pure oxygen or as a component of atmospheric air, the latter of which also contains nitrogen and other typical gases found in atmospheric air. In some embodiments, the metal-containing material comprises one or more of lithium metal, sodium metal, potassium metal, zinc metal, magnesium metal, calcium metal, aluminum metal, copper metal, lead metal and iron metal, typically in a reduced oxygen state, for example a 0-oxidation state. In some embodiments, the electrochemical cell is a zinc-air electrochemical cell.

The electrolyte for a metal-air electrochemical cell typically comprises a liquid medium containing anions capable of reacting with oxidized anode material to form an anionic metal complex. The liquid medium comprises an aqueous medium. In some embodiments, the anions are hydroxide ions, which may be present in solution in the aqueous medium, for example by dissolving an alkali metal hydroxide (e.g., NaOH, KOH) in water to form an aqueous solution of hydroxide ions. The hydroxide ions react with metal cations to form metalate complexes when the anode material is oxidized. In a Zn-air electrochemical cell, the metalate is $Zn(OH)_4^{2-}$ having $Na^+$ or $K^+$ counterions in the electrolyte solution. In some embodiments, the electrolyte comprises potassium hydroxide.

In some embodiments, the electrochemical cell comprises an open or a semi-open system configuration. In some embodiments, the electrochemical cell is a battery.

The system utilizing the method described herein can operate unattended by a human operator for extended periods of time in remote locations.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

Brief Description of the Drawings

For clearer understanding, preferred embodiments will now be described in detail by way of example, with reference to the accompanying drawings, in which:

Fig. 1 depicts a schematic diagram of a zinc-air battery in a semi-open configuration.

Fig. 2 depicts a block diagram of a system for controlling water balance in the zinc-air battery of Fig. 1.

Fig. 3 depicts a flowchart of an algorithm used to control the system of Fig. 2 for controlling water balance in the zinc-air battery of Fig. 1.

Fig. 4 depicts a graph of electrolyte saturation vapor pressure, denoted $P_{w,electrolyte}$, (kPa) as a function of temperature (°C) and OH- concentration (M) vs. time (h) in an experiment for determining empirical water balance relation in a zinc-air battery.

Fig. 5 depicts a graph of Vapor Pressure Difference (kPa) vs. time (h) in the same experiment as Fig. 4, the Vapor Pressure Difference being the difference between the partial pressure of water vapor in inlet air, or $P_{w,air}$, and the saturation vapor pressure of the electrolyte, $P_{w,electrolyte}$.

Fig. 6 depicts a graph of cell water balance ($g_{water}/kg_{humid\ air}$) during discharge during one such test.

Fig. 7 is a graph of cell water balance ($g_{water}/kg_{humid\ air}$) vs. vapor pressure difference (kPa) for two zinc-air cell discharge experiments.

Fig. 8A depicts a schematic diagram of a zinc-air battery in a semi-open configuration having a first embodiment of a water recycling subsystem.

Fig. 8B depicts a schematic diagram of a zinc-air battery in a semi-open configuration having a second embodiment of a water recycling subsystem.

Detailed Description

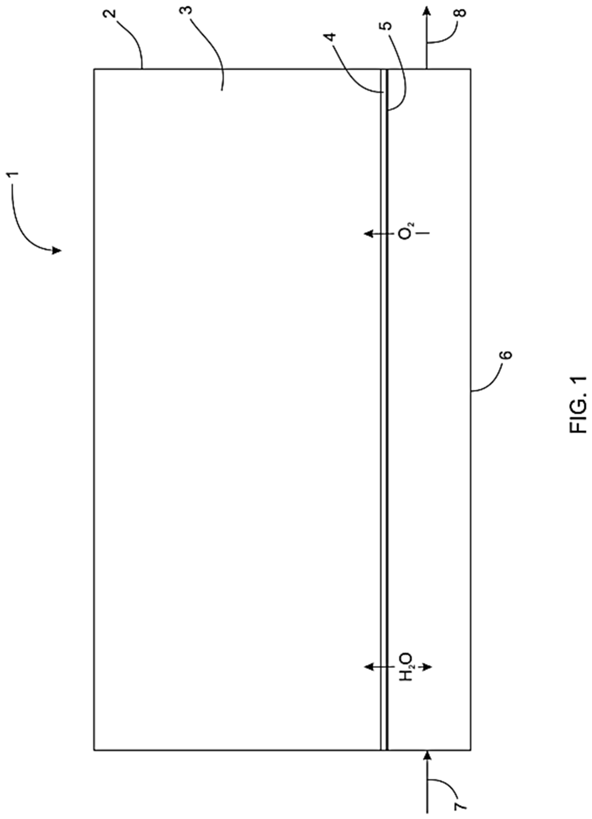

With reference to Fig. 1, a Zn-air battery **1** is depicted schematically having a semi-open system configuration. The Zn-air battery **1** comprises a vented or ventable enclosure **2** containing an aqueous potassium hydroxide electrolyte **3** in contact with a bed of zinc metal **4** supported atop an air-permeable membrane **5** that forms the floor of the enclosure **2**. The enclosure **2** is situated atop an airbox **6** through which a conditioned supply of inlet air **7** flows alongside and beneath the membrane **5**. Oxygen $O_2$ diffuses from the inlet supply of air **7** through the membrane **5** to contact the zinc metal **4**, whereupon the oxygen $O_2$ oxidizes the zinc metal **4** supported on the membrane **5**. Water vapor $H_2O$ permeates through the membrane **5** in both directions, but more water vapor $H_2O$ permeates in a direction from higher water vapor pressure to lower water vapor pressure. In this way, the air **7** flowing through the airbox **6** exchanges mass with the battery **1** until the air flows out of the airbox **6** as outlet air **8** having a somewhat different gaseous composition than the inlet supply of air **7**. In such a configuration, long term mass balance is not guaranteed.

The embodiments of the method and system described below are concerned with properly conditioning air before the air enters the battery in an effort to promote certain cell water balance behaviour. The method described below permits determining how to set the conditions (e.g., temperature, humidity) of the inlet supply of air to promote cell water balance over time in the semi-open configuration.

*System*

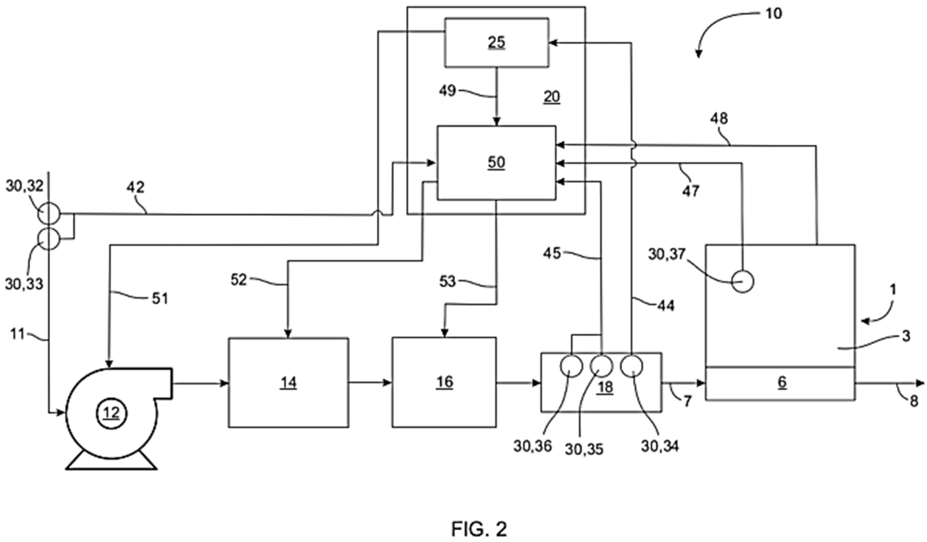

With reference to Fig. 2, a system **10** for controlling water balance in the zinc-air battery **1** of Fig. 1 comprises a variable speed air pump **12**, a temperature controller **14** in pneumatic communication with the air pump **12**, a humidity controller **16** in pneumatic communication with the temperature controller **14** and an air intake manifold **18** in pneumatic communication with the humidity controller **14**. The airbox **6** below the zinc-air battery **1** is in pneumatic communication with the air intake manifold **18** so that untreated air **11** (e.g., atmospheric air) is pumped by the air pump **12** to flow through the temperature controller **14** and the humidity controller **16** to be conditioned prior to flowing into the air intake manifold **18** and then into the airbox **6** as the inlet supply of air **7**. The system **10** further comprises a programmable air system controller **20** in electronic communication with the air pump **12**, the temperature controller **14** and the humidity controller **16** for controlling the functioning of the air pump **12**, temperature controller **14** and humidity controller **16**. The air system controller **20** comprises an air pump sub-controller **25** for controlling the air pump **12**. The system **10** also comprises a plurality of sensors **30** in electronic communication with the air system controller **20** to provide data inputs about the system **10** to the air system controller **20** where a control algorithm **50** utilizes the input data to determine how to control the air pump **12**, humidity controller **16** and temperature controller **14** to achieve a desired ratio of partial pressure of water vapor in the inlet supply of air **7** in relation to equilibrium water vapor pressure of the electrolyte **3**.

The sensors **30** include a relative humidity sensor **32** that measures relative humidity in the untreated air **11**, a temperature sensor **33** that measures temperature in the untreated air **11**, an inlet air pressure sensor **34** that measures pressure **44** of the inlet supply of air **7** at the air intake manifold **18**, an inlet air relative humidity sensor **35** that measures relative humidity of the inlet supply of air **7** at the air intake manifold **18**, an inlet air temperature sensor **36** that measures temperature of the inlet supply of air **7** at the air intake manifold **18**, an electrolyte temperature sensor **37** that measures temperature **47** of the electrolyte **3** in the zinc-air battery **1**.

Input data from the relative humidity sensor **32** and temperature sensor **33** are used by the algorithm to calculate the partial pressure of water vapor **42** of the untreated air **11**. Input data from the relative humidity sensor **35** and temperature sensor **36** are used by the algorithm to calculate the partial pressure of water vapor **45** of the inlet supply of air **7**. Manual titration is used to determine concentration **48** of the electrolyte **3** in the zinc-air battery **1**. The inlet air pressure sensor **34** provides data to the air system controller **20** to control the pump **12** to provide a desired pressure **44** of the inlet supply of air **7**. The amount of pressure **44** that yields a desired air mass flow rate is determined from experimentation and modelling. The air mass flow rate of the pump **12** at any given time is determined from any two of pump pressure ratio (outlet pressure/inlet pressure), pump speed (rpm) and pump power consumption.

The programmed controller **20** takes the measured, estimated and calculated data inputs from the system **10**, and uses these data inputs to calculate an optimal temperature setpoint **52** and an optimal humidity setpoint **53** of the inlet air **7** (i.e. at what rate does water need to be added/removed to/from the inlet air **7**). The controller **20** then controls speed (e.g., rpm) **51** of the air pump **12** using the air pump sub-controller **25** (on the basis of an air mass flow rate setpoint **49**), the temperature controller **14** and/or the humidity controller **16** to achieve a vapor pressure difference between the inlet air **7** and the electrolyte **3** that yields the desired battery water balance outcome (i.e., net water gain, net water loss, or net water balance). The air mass flow rate setpoint **49** is a pre-determined parameter determined solely by the system discharge current and taken as an input when calculating the amount of water being added/removed from the system **10**.

*Method*

The control algorithm **50** controls the flow of water into/out of the inlet air **7** being supplied to the battery **1** based on the desired water balance outcome. The algorithm **50** is based on vapor pressure difference between the inlet supply of air **7** and saturation vapor pressure of the electrolyte **3** in accordance with Equation (1), and cell water balance in accordance with Equation (2).

$$Vapor\ Pressure\ Difference = P_{w,air} - P_{w,electrolyte} \qquad (1)$$

where $P_{w,air}$ is the partial pressure of water vapor in the inlet supply of air **7,** and $P_{w,electrolyte}$ is the saturation vapor pressure of the electrolyte **3**;

$$Cell\ Water\ Balance = \frac{g_{water\ added\ to\ electrolyte}}{kg_{moist\ air\ supplied}} \qquad (2)$$

Cell Water Balance refers to the mass of water being added to/removed from the battery **1** per kg of moist air being supplied. Since the mass flow rate of the inlet supply of air **7** is determined by the state of the battery, Cell Water Balance is describing the rate of water addition/removal to/from the battery **1.**

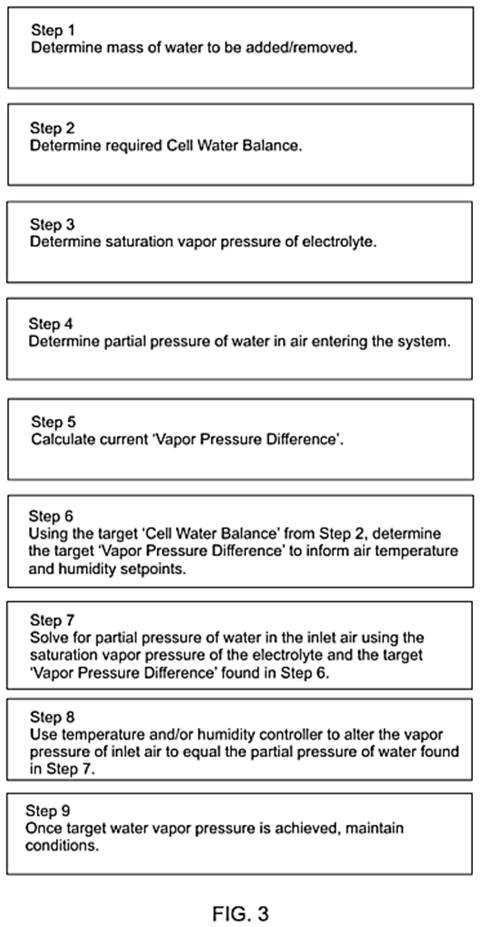

With reference to Fig. 3, when supplying air to one or more metal-air batteries, such as the zinc-air battery **1,** the algorithm **50** can be implemented as follows:

**Step 1.**

Determine the desired mass of water to be added/removed from the battery (if any).

**Step 2.**

To add or remove an amount of water, $m_{water}$, in a time interval, $t$, at a given mass flow rate of air, $\dot{m}_{air}$, Equation (3) can be used to solve for the target 'Cell Water Balance' value required to achieve this goal.

$$m_{water}[g_{water}] = \dot{m}_{air}\left[\frac{kg_{moist\ air}}{hr}\right] * t[hr] * Cell\ Water\ Balance\left[\frac{g_{water}}{kg_{moist\ air}}\right] \qquad (3)$$

**Step 3.**

Determine the saturation vapor pressure of the battery electrolyte (or average saturation vapor pressure of many batteries receiving common air supply).

One way to do this is to measure or estimate the temperature and concentration of the cell electrolyte and use these measurements to calculate the saturation vapor pressure based on an empirically derived formula. 'Concentration' in this case refers to the quantity of solutes dissolved in a water-based electrolyte that reduce the solution's saturation vapor pressure relative to pure water. This concentration can be measured in a variety of ways (manual titration, derived from state of charge estimation, electrochemical modelling, etc.) depending on the application.

The exact relationship that predicts the saturation vapor pressure of the electrolyte (e.g. temperature and concentration), will be unique for different electrolyte formulations. In one example, the saturation vapor pressure of the electrolyte is calculated based on temperature and concentration. A formula, such as Equation (4), for the calculation is derivable from empirical data, as described in Balej J. (1985) International Journal of Hydrogen Energy. 10(4), 233-243., the contents of which is herein incorporated by reference. In the case of the zinc-air battery **1** where the electrolyte **3** comprises KOH, it is assumed that a KOH solution is a sufficient proxy for the electrolyte **3,** which contains other components (zinc, etc.). A more accurate formula for the saturation vapor pressure of a specific electrolyte formulation could be obtained with further experimentation and/or electrochemical modelling.

$$P_{w,electrolyte} = f([M], T) \qquad (4)$$

where $P_{w,electrolyte}$ is the saturation vapor pressure of water vapor above a solution (electrolyte), $M$ is concentration of electrolyte (e.g., free OH⁻ ions), and $T$ is electrolyte temperature. The exact form of this equation will depend on the specific application.

**Step 4.**

Determine the partial pressure of water vapor ($P_{w,air}$) in the air entering the system. One way to do this is using the temperature and relative humidity of untreated air entering the air system. To do so, find the saturation vapor pressure of water ($P_{sat}$) at the temperature of the untreated air (there are many empirically derived formulas in the art for this, for example, the one in Huang J. (2018) Journal of Applied Meteorology and Climatology. 57:1265-1272, the entire contents of which is herein incorporated by reference) and multiply saturation vapor pressure by the % relative humidity (%$RH$) of the air.

$$P_{w,air} = P_{sat} * \%RH \qquad (5)$$

**Step 5.**

Calculate the current 'Vapor Pressure Difference' using Equation (1). This value represents the difference between the partial pressure of water vapor in the air entering the system, and the saturation vapor pressure of the electrolyte in its current state.

**Step 6.**

Using the target 'Cell Water Balance' value determined in **Step 2,** use a lookup table (or similar) to determine the target 'Vapor Pressure Difference' which will inform the air temperature and humidity setpoints. The lookup table (or similar) is empirically determined via lab experimentation using an approach described in the following section. It is important to note that this is not the only way to achieve such a relation. Theoretical calculation and/or computer modelling may also be used. When the target Vapor Pressure Difference and Current Vapor Pressure Difference are not the same, water must be added or removed from the inlet air to reach the target Vapor Pressure Difference.

**Step 7.**

Solve for $P_{w,air}$ in Equation (1) using the saturation vapor pressure of the electrolyte, $P_{w,electrolyte}$, and the target 'Vapor Pressure Difference' found in **Step 6.**

**Step 8.**

Using the temperature controller **14** and/or the humidity controller **16,** alter the vapor pressure of the inlet air **7** to equal the value of $P_{w,air}$ found in **Step 7**. Often, only the humidity controller **16** is necessary to control the mass flow of water to/from the air based on a target Vapor Pressure Difference. However, the amount of water that air can hold is a function of temperature of the air. As such, the temperature of the air may need to be altered before water can be added/removed. The humidity controller **16** enables both humidification and dehumidification, however, dehumidification is usually rarely required.

**Step 9.**

Once the target vapor pressure, $P_{w,air}$, is achieved, and therefore the target Vapor Pressure Difference and Cell Water Balance ware achieved, maintain these conditions for time $t$ used in **Step 2.**

*Experimental Procedure for Determining Empirical Water Balance Relation in Metal-Air Batteries*

The following section details an example of how to use experimentation to empirically determine a relationship between 'Vapor Pressure Difference' and 'Cell Water Balance' for **Step 6** of the algorithm. This example is specifically directed to the zinc-air battery **1** where the electrolyte **3** comprises aqueous potassium hydroxide. However, the procedure is generalizable to any metal-air electrochemical cell with any appropriate liquid aqueous electrolyte.

The following experimental procedure to generate the empirical data related Vapor Pressure Difference [kPa] (which is the difference between the partial pressure of water vapor in the inlet air being supplied to the battery, and the saturation vapour pressure of electrolyte in a metal-air battery) to Cell Water Balance [g/kg] (which is the rate at which the metal-air battery is gaining or losing water). The units here are grams of water per kilogram of moist air supplied.

The generated data could be in the form of an equation or a lookup table wherein an operator could determine a 'Vapor Pressure Difference' given a 'Cell Water Balance' value or vice versa. The first step requires a model that can predict the saturation vapor pressure of the electrolyte being used across the full range of its operating conditions. As mentioned in **Step 6** above, this is not the only way to achieve such a relation. Theoretical calculation and/or computer modelling may also be used.

To generate the desired relation, an expression that can predict the saturation vapor pressure of an electrolyte across its operating conditions is required. If the electrolyte formulation is established/well studied, this data may be available in literature. In lieu of data specific to a given electrolyte, published data on the saturation vapor pressure of the primary salt solution (KOH solution in this case) at different temperatures and concentrations can be used, assuming the primary salt solution is similar enough to the electrolyte to be useful.

In the present example, the following Equation 6 was derived from a table of measured values:

$$logP_{w,KOH} = -0.1139M - 0.021705M^2 + 8.7226 \times 10^{-4}M^3 +$$
$$(1 - 0.03003M + 0.004177M^2 - 1.4187 \times 10^{-4}M^3) \qquad (6)$$
$$\times \left( 188.008 - \frac{7610.99}{T} - 71.087logT + 0.045713T \right) [kPa]$$

where $M$ is the electrolyte's free OH⁻ molarity, and $T$ is the electrolyte temperature.

To generalize for any metal-air battery, any expression that accurately predicts the saturation vapor pressure of the battery's electrolyte would work. Different batteries will have different electrolytes and therefore different expressions, potentially even without different parameters. Saturation vapor pressure of a novel electrolyte formulation could also be found using electrochemical modelling.

The experimental setup used herein comprised:

1. A zinc-air battery without internal or external electrolyte leaks.
2. A constant air supply.
3. Sensors that measured air temperature, pressure, and relative humidity.
4. An electrolyte thermocouple.
5. Electrolyte titration equipment.

Generally, air only needs to be supplied to metal-air batteries during discharge, so that is the cell state the tests described in this document were completed in. However, the same experiments could be completed during charge or idle. So long as there is air flow to the battery, the same physics still apply. Air passing through the battery is what exchanges water with the electrolyte, so without air supply, there is no water exchange. Testing during charge or discharge also has the benefit of causing the battery to experience the full range of temperatures and concentrations that it may experience during operation, whereas performing the tests while the cell is idling does not.

Before the test began, sensors were installed to measure the temperature, pressure, and relative humidity of air in the inlet and outlet air stream of the battery. Further, a thermocouple was installed to measure the temperature of the electrolyte close to the air-permeable membrane of the battery. The electrolyte was titrated to determine the free OH⁻ molarity in the electrolyte (i.e., the electrolyte concentration). A constant airflow to the battery was then initiated. The air flow rate was determined according to the stoichiometric requirements of the discharge reaction at a given current. The battery was then discharged (though one could also charge or let idle). In the experiments, cells were typically discharged for 12-16 hours. At the end of the discharge, the electrolyte was titrated to determine the free OH⁻ molarity in the electrolyte.

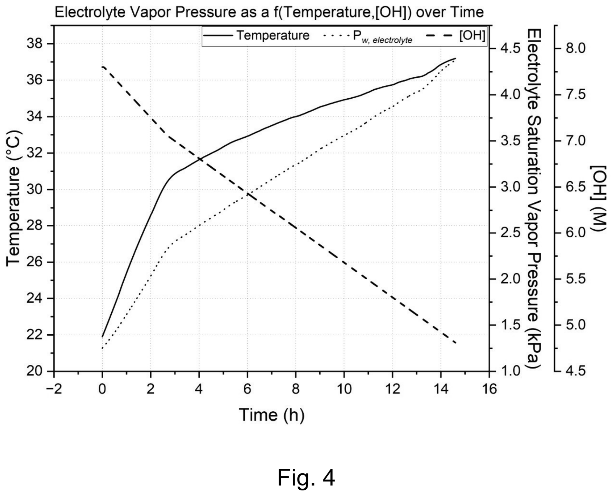

From the electrolyte concentration measurements taken at the beginning and end of the test, a continuous molarity vs. time function was interpolated, based on knowledge of the reactions taking place, to see how the electrolyte molarity changed during the test. Here, zincate molarity was measured from the titration, and the molarity of free OH- ions was then calculated based on this titration. Having also recorded the electrolyte temperature throughout the test, the saturation vapor pressure of the electrolyte was calculated using Equation 6. Fig. 4 illustrates how the electrolyte vapor pressure changed over the course of a discharge based on the temperature and concentration of the electrolyte for one such test.

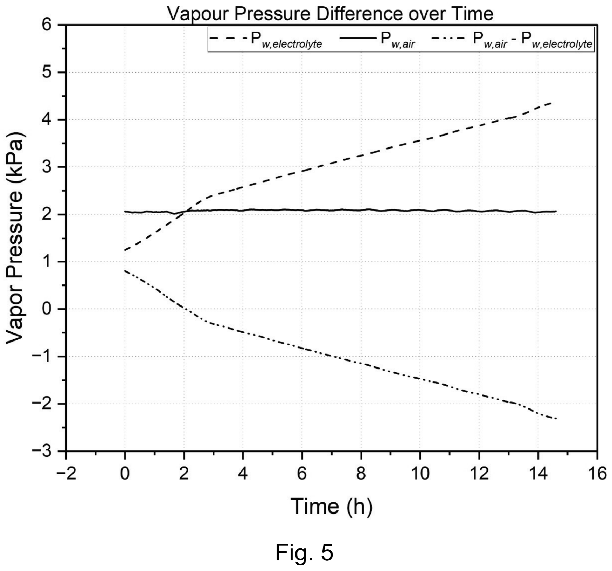

The partial pressure of water vapor in the inlet air throughout the test was then calculated from the temperature and relative humidity of the air. With both the saturation vapor pressure of the electrolyte and the partial pressure of water vapor in the inlet air mapped throughout the test, one can be subtracted from the other to find the Vapor Pressure Difference vs. time. Fig. 5 illustrates how the vapor pressure difference changes during the same test as Fig. 4. Saturation vapor pressure is being subtracted from inlet air partial pressure of water vapor, so a negative value means that the saturation vapor pressure of the electrolyte is greater than the partial pressure of water vapor in the inlet supply of air, and vice versa.

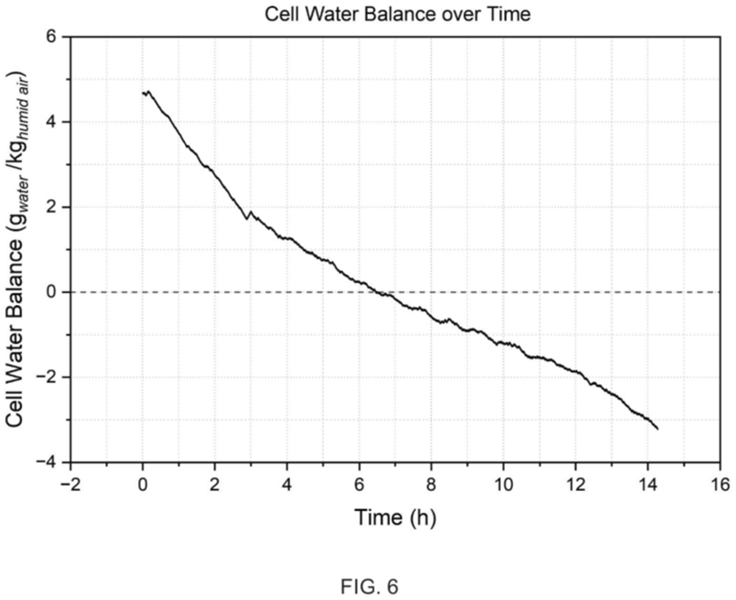

The Cell Water Balance was then calculated by subtracting the specific humidity of the battery's outlet air from the specific humidity of its inlet air. Specific humidity (grams of water per kg of moist air) was calculated from air temperature, pressure, and relative humidity. A positive Cell Water Balance value indicates that the air leaving the cell is drier than the air entering the cell, and therefore the cell has gained water. A negative number indicates that the air leaving the cell has more water than the air entering the cell, indicating that the cell has lost water to the air stream. Fig. 6 shows the cell water balance during one such test.

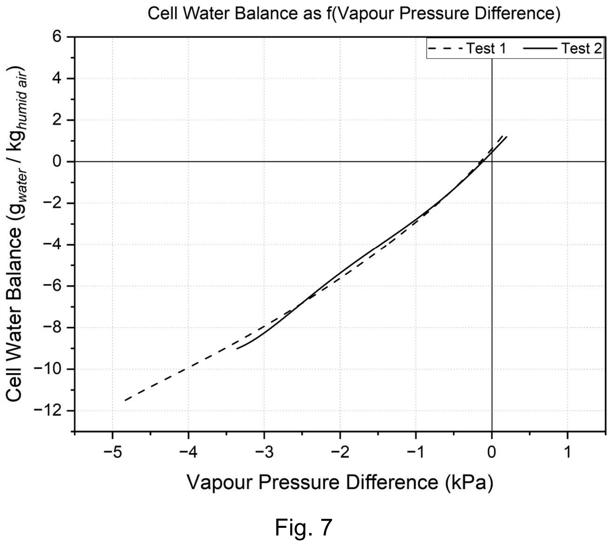

A time series dataset was therefore created where each Vapour Pressure Difference datapoint has a corresponding Cell Water Balance datapoint. Graphing these datapoints on a scatter plot illustrated that a greater difference between the partial pressure of water vapor in the inlet supply of air and the saturation vapor pressure of the electrolyte yields greater water gain or loss (depending on which is larger). Fig. 7 shows this relationship. Two separate discharges on the same battery are plotted in Fig. 7. Passing through [0,0] is expected on this plot because it implies that no difference in vapor pressure yields no cell water loss or gain. I.e., there is no partial pressure difference to 'drive' net water transfer.

Having a time series dataset with corresponding Vapour Pressure Difference and Cell Water Balance values facilitates several approaches to creating a model that predicts Cell Water Balance from Vapor Pressure Difference. For instance, regression could be used to generate a continuous calibration curve using the data from several tests. Alternatively, a series of discrete points could be recorded in a lookup table and interpolated to find Cell Water Balance given Vapor Pressure Difference or vice versa. Thus, some empirical relation can be derived between the Vapor Pressure Difference and Cell Water Balance, and the empirical relation is what is needed for **Step 6** of the algorithm.

*Water Recycling Subsystems*

One way the water balance algorithm could be used to achieve long term water balance in zinc air electrochemical cells is to couple the algorithm with an electrolyte level sensor and a water reservoir. In this approach, the water balance algorithm is intentionally used to bias the cell or cells to lose water over time so that the system is in a more predictable state. That is, the partial pressure of water vapour in the air supplied to the cell(s) is controlled to be lower than the equilibrium partial pressure of water vapour above the electrolyte at its current temperature and concentration. As the electrolyte level drops due to water loss through the air cathode, an electrolyte level sensor will detect when the electrolyte has reached a low threshold. In response to the sensor indicating that the low threshold has been reached, a controller will instruct valves and/or pumps to direct liquid water stored in a reservoir to be added back to the cell until the electrolyte has returned an acceptable level, as determined by the level sensor. The liquid water from the reservoir may utilize hydrostatic pressure, or a pump to direct the water to the cell(s).

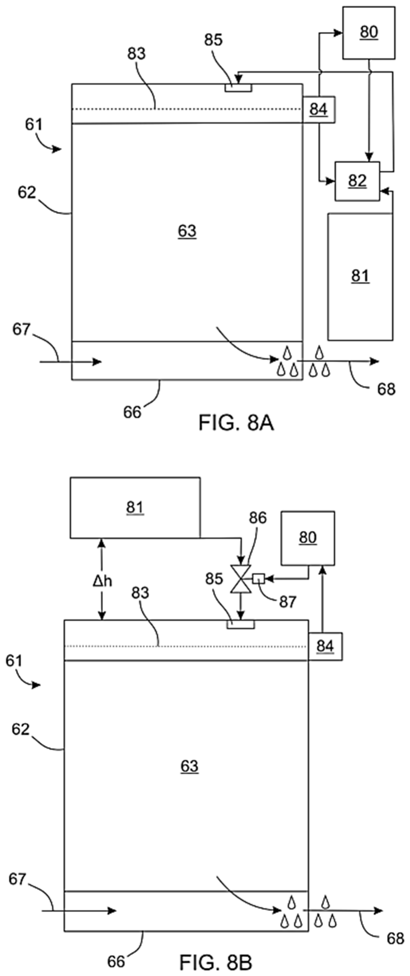

Fig. 8A depicts a schematic diagram of a zinc-air battery **61** in a semi-open configuration having a first embodiment of a water recycling subsystem. The zinc-air battery **61** comprises a vented or ventable enclosure **62** containing an aqueous potassium hydroxide electrolyte **63** in contact with a bed of zinc metal supported atop an air-permeable membrane that forms the floor of the enclosure **62**. The enclosure **62** is situated atop an airbox **66** through which a conditioned supply of inlet air **67** flows alongside and beneath the membrane. Oxygen diffuses from the inlet supply of air **67** through the membrane to contact the zinc metal, whereupon the oxygen oxidizes the zinc metal supported on the membrane. Water vapor permeates through the membrane in both directions, but more water permeates out of the enclosure **62** than into the enclosure **62**. In this way, the air **67** flowing through the airbox **66** exchanges mass with the battery **1** until the air flows out of the airbox **67** as outlet air **68** having a greater amount of water than the inlet supply of air **67**. Such permeation of water causes the level of the electrolyte **63** to decrease away an acceptable electrolyte level **83**.

For this reason, the zinc-air battery **61** is associated with a water recycling subsystem. In a first embodiment, the water recycling subsystem comprises a water reservoir **81** located below the acceptable electrolyte level **83** and a water pump **82** in fluid communication with the water reservoir **83** to pump water from the water reservoir **81** to a fill port **85** at a top of the enclosure **62** above the acceptable electrolyte level **83** to replenish the electrolyte **63** with water when the electrolyte level is below the acceptable electrolyte level **83**. To determine when the electrolyte level is below the acceptable electrolyte level **83,** the water recycling subsystem comprises a liquid level sensor **84** located on the enclosure **62** at the acceptable electrolyte level **83**. The liquid level sensor **84** is in electronic communication with a programmable controller **80** and signals from the liquid level sensor **84** are processed by the controller **80**. The controller **80** is also in electronic communication with the pump **82** so when the controller **80** determines that the electrolyte level is too low, the controller **80** sends a signal to switch on the pump **82** which pumps water from the reservoir **81** into the enclosure **62** through the fill port **85** until the electrolyte level is at or above the acceptable electrolyte level **83.** In practice, there is an acceptable margin around the acceptable electrolyte level **83,** the margin having a lower level below which the electrolyte level is too low and above which the electrolyte level is too high. The water recycling subsystem operated to keep the electrolyte level in the margin.

Fig. 8B depicts a schematic diagram of the zinc-air battery **61** having a second embodiment of the water recycling subsystem. The second embodiment of the water recycling subsystem is gravity fed and does not involve a liquid pump. In Fig. 8B, the water reservoir **81** has a hydrostatic level that is located above the enclosure **62** by a distance $\Delta\mathbf{h}$ and the water flows from the reservoir **81** to the fill port **85** under the influence of gravity. Instead of a pump, the water recycling subsystem comprises a valve **86** that can be electrically switched on and off by a switch **87.** The switch **87** is controlled by the programmable controller **80** utilizing signals from the liquid level sensor **84** in the same manner as the pump **82** is controlled in the embodiment seen in Fig. 8A.

The novel features will become apparent to those of skill in the art upon examination of the description. It should be understood, however, that the scope of the claims should not be limited by the embodiments but should be given the broadest interpretation consistent with the wording of the claims and the specification as a whole.

**Claims**

1. A method of controlling water balance in a metal-air electrochemical cell during operation of the electrochemical cell, the method comprising:

   during operation of the metal-air electrochemical cell, controlling a ratio of partial pressure of water vapor in an inlet supply of air to equilibrium water vapor pressure of an electrolyte of the metal-air electrochemical cell, wherein controlling the ratio is done by controlling one or both of the partial pressure of water vapor in the inlet supply of air and the equilibrium water vapor pressure of the electrolyte.

2. The method of claim 1, wherein the partial pressure of water vapor in the inlet supply of air is controlled, and the partial pressure of water vapor in the inlet supply of air is controlled by changing one or both of temperature and relative humidity of the air in the inlet supply of air.

3. The method of claim 1 or claim 2, wherein the equilibrium water vapor pressure of the electrolyte is controlled, and the equilibrium water vapor pressure of the electrolyte is controlled by changing one or both of temperature and concentration of the electrolyte.

4. The method of claim 1, wherein temperature and concentration of the electrolyte are determined, the equilibrium water vapor pressure of the electrolyte is determined based on the temperature and concentration of the electrolyte, and one or both of temperature and relative humidity of the air in the inlet supply of air are changed to add or remove water from the electrolyte or to maintain water in the electrolyte at a same level.

5. The method of claim 1, wherein mass flow rate of water in the inlet supply of air is controlled by changing the partial pressure of water vapor in the inlet supply of air based on a difference between the partial pressure of water vapor in the inlet air supply and the saturation vapor pressure of the electrolyte that will yield a target amount of cell water addition/loss to/from the cell.

6. The method of claim 1, wherein controlling the ratio is done by:

   determining temperature and concentration of the electrolyte;
   determining the equilibrium water vapor pressure of the electrolyte based on the temperature and concentration of the electrolyte;
   determining temperature and relative humidity of the inlet supply of air;
   determining the partial pressure of water vapor in the inlet supply of air based on the temperature and relative humidity of the air;
   performing one of the following:

       for net water gain, increasing the partial pressure of water vapor in the inlet supply of air above the equilibrium vapor pressure of the electrolyte by increasing the temperature and/or relative humidity of the inlet supply of air;
       for net water loss, decreasing the partial pressure of water vapor in the inlet supply of air below the equilibrium vapor pressure of the electrolyte by decreasing the temperature and/or relative humidity of the inlet supply of air;
       for net water balance, altering the partial pressure of water vapor in the inlet supply of air, by altering the temperature and/or relative humidity of the inlet supply of air, to equal the equilibrium vapor pressure of the electrolyte; and,
       continuing to supply the air until a target amount of water has been added, removed or maintained in balance.

7. The method of claim 5 or claim 6, wherein the concentration of the electrolyte is determined by manual titration measurement or state of charge estimation.

8. The method of any one of claims 5 to 7, further comprising determining mass flow rate of the inlet supply of air and determining an amount of water to be added or removed from the electrolyte over a given time based on the mass flow rate.

9. The method of any one of claims 5 to 8, wherein the electrochemical cell is one cell of a plurality of electrochemical cells, the temperature and concentration of the electrolyte comprises determining an average temperature and concentration of the electrolytes across all the cells in the plurality of electrochemical cells receiving the air from the inlet supply of air, and determining the equilibrium water vapor pressure of the electrolyte is based on the average temperature and concentration.

10. The method of claim 1, wherein:

   a target cell water balance is identified;
   a target water vapor pressure difference between the partial pressure of water vapor in the inlet supply of air and the equilibrium water vapor pressure of the electrolyte, which would result in achieving the target cell water balance, is determined empirically from a time series dataset correlating the vapor pressure difference to the cell water balance; and,
   temperature and relative humidity of the inlet supply of air are adjusted based on temperature and relative humidity setpoints determined from the target water vapor pressure difference.

11. The method of claim 10, wherein the time series dataset correlating the vapor pressure difference to the cell water balance is obtained from:

   a continuous calibration curve using data from a plurality of tests; and/or,
   a series of discrete points of the vapor pressure difference vs. the cell water balance recorded in a lookup table and interpolated to find the cell water balance given the vapor pressure difference or vice-versa.

12. The method of any one of claims 1 to 11, wherein the electrolyte comprises potassium hydroxide.

13. The method of any one of claims 1 to 12, wherein the electrochemical cell is a zinc-air electrochemical cell.

14. The method of any one of claims 1 to 13, wherein the electrochemical cell is a battery.

15. A system for controlling water balance in a metal-air electrochemical cell during operation of the electrochemical cell, the system comprising:

   an air supply;
   a metal-air electrochemical cell pneumatically connected to the air supply to receive inlet air from the air supply;
   a humidity sensor configured to determine the relative humidity of the inlet air;
   a first temperature sensor configured to determine the temperature of the inlet air;
   a humidity control device and a temperature control device between the air supply and the metal-air electrochemical cell for controlling relative humidity and temperature of the inlet air;
   a second temperature sensor configured to determine the temperature of an electrolyte in the electrochemical cell; and,
   a programmable controller programmed to perform the method as defined in any one of claims 1 to 14 and configured to receive signals from the sensors and control the relative humidity and temperature control devices based on the signals received from the sensors.

16. The system of claim 15, further comprising at least one pressure sensor to determine pressure of the inlet air.

17. The system of claim 15 or claim 16 further comprising a water recycling subsystem that replenishes water in the electrolyte when the electrolyte level in the electrochemical cell is below an acceptable electrolyte level.

FIG. 1

FIG. 2

**Step 1**
Determine mass of water to be added/removed.

**Step 2**
Determine required Cell Water Balance.

**Step 3**
Determine saturation vapor pressure of electrolyte.

**Step 4**
Determine partial pressure of water in air entering the system.

**Step 5**
Calculate current 'Vapor Pressure Difference'.

**Step 6**
Using the target 'Cell Water Balance' from Step 2, determine the target 'Vapor Pressure Difference' to inform air temperature and humidity setpoints.

**Step 7**
Solve for partial pressure of water in the inlet air using the saturation vapor pressure of the electrolyte and the target 'Vapor Pressure Difference' found in Step 6.

**Step 8**
Use temperature and/or humidity controller to alter the vapor pressure of inlet air to equal the partial pressure of water found in Step 7.

**Step 9**
Once target water vapor pressure is achieved, maintain conditions.

FIG. 3

Fig. 4

Fig. 5

FIG. 6

EP 4 749 773 A1

Fig. 7

FIG. 8A

FIG. 8B

Europäisches Patentamt
European Patent Office
Office européen des brevets

# EUROPEAN SEARCH REPORT

**Application Number**

EP 25 21 2341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2023 130550 A (FDK CORP) 21 September 2023 (2023-09-21) * paragraphs [0009] - [0055]; figures 1-5 * | 1-17 | INV. H01M12/06 |
| X | EP 0 696 384 B1 (AER ENERGY RESOURCES INC [US]) 11 December 1996 (1996-12-11) * column 1 - lines 11-44; figures 1-5 * * line 15, paragraph 11 - line 35, paragraph 12 * | 1,2,4-6, 13,14 | |
| A | AU 2014 214 641 A1 (FLUIDIC INC; FORM ENERGY INC [US]) 3 September 2015 (2015-09-03) * the whole document * | 1-17 | |
| A | US 2008/096061 A1 (BURCHARDT TRYGVE [CH]) 24 April 2008 (2008-04-24) * the whole document * | 1-17 | |

**TECHNICAL FIELDS SEARCHED (IPC)**

H01M

The present search report has been drawn up for all claims

| Place of search | Date of completion of the search | Examiner |
|---|---|---|
| Munich | 23 March 2026 | Brune, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 2341

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | | Publication date | Patent family member(s) | | Publication date |
|---|---|---|---|---|---|
| JP 2023130550 | A | 21-09-2023 | JP | 7792824 B2 | 26-12-2025 |
| | | | JP | 2023130550 A | 21-09-2023 |
| EP 0696384 | B1 | 11-12-1996 | AT | E146306 T1 | 15-12-1996 |
| | | | AU | 6823294 A | 21-11-1994 |
| | | | CA | 2161668 A1 | 10-11-1994 |
| | | | DE | 69401130 T2 | 28-05-1997 |
| | | | EP | 0696384 A1 | 14-02-1996 |
| | | | JP | 2970938 B2 | 02-11-1999 |
| | | | JP | H08511896 A | 10-12-1996 |
| | | | WO | 9425991 A2 | 10-11-1994 |
| AU 2014214641 | A1 | 03-09-2015 | AU | 2014214641 A1 | 03-09-2015 |
| | | | BR | 112015018963 A2 | 18-07-2017 |
| | | | CA | 2900867 A1 | 14-08-2014 |
| | | | CN | 105144449 A | 09-12-2015 |
| | | | EP | 2954583 A1 | 16-12-2015 |
| | | | ES | 2666420 T3 | 04-05-2018 |
| | | | JP | 6316322 B2 | 25-04-2018 |
| | | | JP | 2016510489 A | 07-04-2016 |
| | | | US | 2014227615 A1 | 14-08-2014 |
| | | | US | 2019280318 A1 | 12-09-2019 |
| | | | WO | 2014124386 A1 | 14-08-2014 |
| | | | ZA | 201505831 B | 27-07-2016 |
| US 2008096061 | A1 | 24-04-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63715244

**Non-patent literature cited in the description**

- **BALEJ J**. *International Journal of Hydrogen Energy*, 1985, vol. 10 (4), 233-243

- **HUANG J.** *Journal of Applied Meteorology and Climatology*, 2018, vol. 57, 1265-1272